Europäisches Patentamt

European Patent Office

Office européen des brevets

(11) Publication number: **0 239 297**
**A2**

(12) **EUROPEAN PATENT APPLICATION**

(21) Application number: **87302187.7**

(22) Date of filing: **13.03.87**

(51) Int. Cl.⁴: **G01N 27/46**

(30) Priority: **27.03.86 GB 8607778**

(43) Date of publication of application:
**30.09.87 Bulletin 87/40**

(84) Designated Contracting States:
**DE FR GB NL SE**

(71) Applicant: **LAND COMBUSTION LIMITED**
**Stubley Lane**
**Dronfield Sheffield S18 6NQ(GB)**

(72) Inventor: **West, Kenneth O'Neill**
**35 Rivelin Park Road**
**Sheffield(GB)**

(74) Representative: **Ford, Michael Frederick et al**
**MEWBURN ELLIS & CO. 2/3 Cursitor Street**
**London EC4A 1BQ(GB)**

(54) **Electrochemical sensors.**

(57) An electrochemical sensor for measuring the concentrations of gases, the sensor including working, reference and auxiliary electrodes (22,40,42) and a non-aqueous electrolyte.

So that the reference electrode (40) will be stable over a long period of use in the non-aqueous electrolyte, it is made of silver and thinly coated with silver pyro-phosphate.

FIG.1

### "Electrochemical sensors".

The invention relates to the production of electrochemical sensors which can be used to measure the concentrations of particular gases in a variety of situations.

Sensors of various kinds are used, for example, in monitoring the emission of pollutants from the smoke stacks of power stations burning fossil fuel, but such devices must be of relatively low cost, and must be reliable in the aggressive environment in which they are used. They must be capable of working reliably in temperatures up to 300°C, or even higher, and must not be affected by abrasion from high velocity particulate material or by corrosion from the highly corrosive gases which are present in smoke stack emissions.

In a previous approach to solve the problem of how to reliably monitor the mean concentration of gas in a space, there has been located in the space an electrochemical cell having a container permeable to the gas, the container being filled with a suitable electrolyte, and working, reference and auxiliary electrodes being in contact with the electrolyte, and there has been made an electrochemical determination of the gas at the working electrode (e.g. by maintaining a potential between the working and reference electrodes and measuring the current between the working and auxiliary electrodes). The working electrode has been constituted by a metallised layer applied to a gas permeable membrane by means of which the container has been permeable to the gas. The third, auxiliary electrode has been used to prevent polarisation of the reference electrode, the three electrodes being connected by means of a potentiostat, the metallised membrane thus acting as an electrocatalytic surface so that gases permeating through it have been able to give rise to a cell current. The cell current has been able to be related to a partial pressure of a particular gas. However, if an electrochemical cell of this kind is to be able to operate at high temperatures such as are encountered in the smoke stacks of furnaces it is essential that a non-aqueous electrolyte is used, for example phosphoric acid can be used up to 300°C. A particular problem when such an electrolyte is to be used is in the provision of a suitable reference electrode.

The invention as claimed is intended to provide a remedy. It solves the problem of how to produce an electrochemical sensor containing a non-aqueous electrolyte in a most convenient manner.

The advantages offered by the invention are, mainly, that it provides a method of making a reference electrode for an electrochemical sensor containing a non-aqueous electrolyte which can therefore operate at high temperatures such as are encountered in the smoke stacks of furnaces, the reference electrode being one which will be very stable over a long period of use despite being used in phosphoric acid electrolyte.

One way of carrying out the invention is described in detail below with reference to drawings which illustrate, by way of example, one specific embodiment, in which:-

Figure 1 is a semi-diagrammatic view of an electrochemical sensor embodying the invention, and

Figure 2 is a diagrammatic representation showing the electrical connections of the sensor.

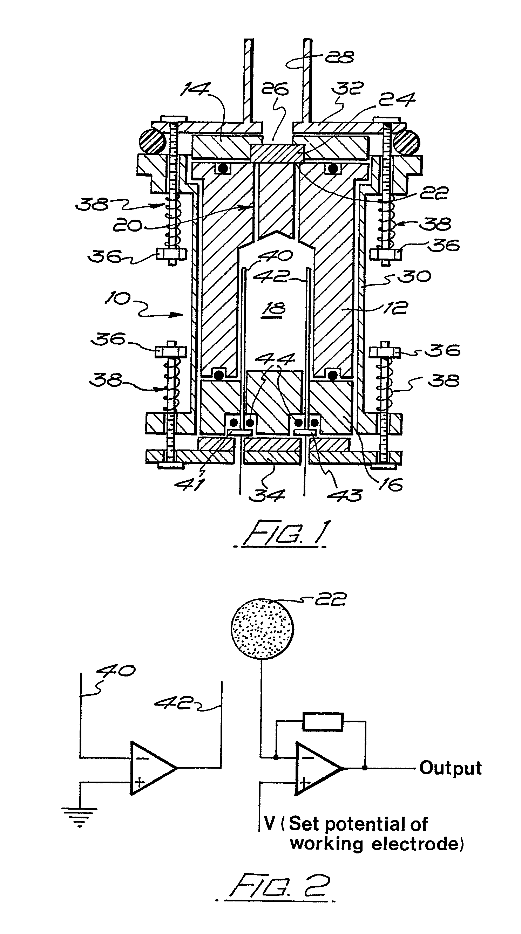

Referring now to Figure 1 of the drawings, the electrochemical sensor there illustrated has been produced for use in a smoke stack of a power station in temperatures of up to about 300°C. The sensor has a container generally indicated 10 on the form of a body part 12 with end caps 14 and 16. A central cavity 18 is formed within the body part and a number of small holes 20 extend from the upper end of the cavity to the top surface of said body part. A metallised membrane 22 (constituting a working electrode) and a sintered stainless steel disc 24 overlie the small holes 20, the membrane and disc being contained in a counterbore in the underside of the end cap 14. A central bore 26 in said end cap communicates with a passage 28 which, in use of the sensor, will communicate with the interior of a smoke stack to be monitored for atmospheric pollutants. The parts which form the container 10, that is to say the body part 12 and end caps 14 and 16, are made of a polymer material and are loosely contained in a metal sleeve 30 with end plates 32 and 34, the passage 28 being formed in an integral stub portion of the end plate 32. The end plates are connected to flange portions of the metal sleeve by means of nuts and bolts 36 and springs 38. The construction can thus comply to the considerable expansions and contractions of the body part which occur due to the high temperatures at which the sensor is to operate.

A non-aqueous electrolyte constituted by a quantity of phosphoric acid is contained in the central cavity of the body part. A reference electrode 40 and an auxiliary electrode 42 extend through respective holes in the end cap 16 of the container and into the electrolyte. Respective metal sealing plates 41,43 have been brazed around the two electrodes and these are contained in respective counterbores in the end plate to bear against respective O-ring seals 44.

Electrical connections to the electrochemical sensor just described are as illustrated diagrammatically in Figure 2. An electrochemical determination of the gas at the working electrode can be made by maintaining a potential between the working and reference electrodes and measuring the current between the working and auxiliary electrodes.

The auxiliary electrode referred to above is made of a suitable inert metal, so that it is able to stand up to attack by the phosphoric acid electrolyte. The reference electrode is made of silver and has been produced by a method which has resulted in the finished electrode being thinly coated with silver pyro-phosphate which is only sparingly soluble in phosphoric acid. The method referred to has involved immersing a length of silver wire in a mixture of pyro and meta-phosphoric acids which has been formed by slowly heating phosphoric acid to a temperature of about 300°C. It has been found that an appropriate thickness of silver pyro-phosphate has been deposited on the wire when the wire has been immersed in the mixture for a period of about 2 hours.

It is thought that a reference electrode produced as just described will be very stable over a long period of use despite being used in phosphoric acid electrolyte. The electrochemical cell of which it forms a part can be used at temperatures of up to 300°C to measure the concentrations of particular gases in a variety of situations. However, various modifications can be made, in particular in the manner in which the silver wire is coated with silver pyro-phosphate. For example, it could be coated electrolytically.

In order to enable the sensor to operate in a temperature in excess of 300°C, means may be provided for removing heat from the body of the sensor. For example, the body of the sensor could be mounted in a heat sink surrounded by a thermal barrier, and heat could be removed from the heat sink by the use of a heat pipe extending to a heat removal zone located outside the stack. The heat removal zone could comprise the condenser end of the heat pipe being finned so that heat loss is by natural convection.

## Claims

1. A method of making an electrochemical sensor which can be used to measure the concentration of particular gases, the method including the steps of making a gas permeable container for containing a suitable electrolyte, and providing working, reference and auxiliary electrodes for contacting the electrolyte, characterised in that the reference electrode is made by thinly coating a length of silver wire with silver pyro-phosphate which is only sparingly soluble in phosphoric acid, the finished electrode being a very stable reference electrode when used in a phosphoric acid electrolyte.

2. The method according to claim 1, further characterised in that the length of silver wire is thinly coated with silver pyro-phosphate by immersing it in a mixture of pyro and meta-phosphoric acids which has been formed by heating phosphoric acid.

3. The method according to claim 2, further characterised in that the silver wire is immersed in the mixture of pyro and meta-phosphoric acids for a period of about 2 hours to cause it to be coated with silver pyro-phosphate to an appropriate thickness.

4. The method according to either one of claims 2 and 3, further characterised in that the mixture of pyro and meta-phosphoric acids is formed by slowly heating phosphoric acid to a temperature of about 300°C.

5. An electrochemical sensor for determining the concentrations of particular gases, the sensor including a container for containing a suitable electrolyte and including also working, reference and auxiliary electrodes for contacting the electrolyte, characterised in that the reference electrode is a silver wire thinly coated with silver pyro-phosphate.

6. An electrochemical sensor according to claim 5, further characterised in that the reference electrode has been made by the method claimed in any one of claims 1 to 4.

_FIG. 1_

V ( Set potential of
working electrode)

_FIG. 2_